# EUROPEAN PATENT APPLICATION

(11) **EP 2 060 998 A1**
(43) Date of publication of application: **20.05.2009**
(21) Application number: 07120727.8
(22) Date of filing: 14.11.2007
(51) Int. Cl.: G06Q 10/00

(54) **Transaction processing systems and methods**

(71) Applicant: General Electric Capital Corporation, 06851 CT Norwalk (US)
(72) Inventor: Joyce, Charlotte, Old Market, Bristol BS2 0PL (GB); Reading, Vaughan, Almondsbury, Bristol BS32 4GQ (GB); Anderson, Damian, c/o GE Capital Solutions, Sale, Greater Manchester M33 2GZ (GB); Shihab, Hashem, Almondsbury, Bristol BS32 4GQ (GB)
(74) Representative: Bedford, Grant Richard

(57) **Abstract**

The present invention relates to transaction processing systems and methods. In one embodiment, a transaction processing system 100 for secure paperless approval of electronic documents is provided. The system 100 comprises a communications network 180, a document management server 120 that is operable to verify and approve the content of an electronic document and to generate an approved document therefrom, a client server 130 that is operable to provide the electronic document for approval to the document management server 120 via the communications network 180, and a user terminal 140 that is operable to receive the approved document from the document management server 120 via the communications network 180 and provide the approved document to a user.

## Description

### Field

The present invention relates to transaction processing systems and methods. In particular, the present invention relates to transaction processing systems and methods that can be used for secure paperless approval of electronic documents.

### Background

Various systems are known for transaction processing. These are generally used as tools to manage communications and/or documents exchanged between one or more parties to a transaction. For example, known systems include: inventory management and ordering systems [1]; eCommerce transaction management systems [2, 3]; and electronic document management systems/transaction processing systems used for managing new product development projects and/or for management of commercial contracts, etc. [4, 5].

Whilst various of these systems work well for the application specific transaction processing tasks for which they are designed, they are not suitable for all transaction processing applications.

For example, certain functionality requirements may be imposed on transaction processing systems because of the nature of the transactions that are to be performed. These might be regulatory requirements or standards requirements imposed, for example, by various regulatory bodies (e.g. the not-for-profit, membership based, industry body, BACS is responsible in the UK for defining standards and requirements relating to electronic payment services, such as direct debit and BACS direct credit transfers [6]).

Such requirements can, in turn, lead to the imposition of certain technical limitations on transaction processing systems which conventional systems are not designed to deal with. The integration of various externally imposed functional requirements into conventional transaction processing systems to enhance their functionality is thus currently technically problematic. This is particularly so where transactions are to be conducted between more than two parties using conventional systems, since often regulatory or industry standard requirements mean that such conventional systems ensure that a transaction process cannot be conducted, for example, in an entirely paperless manner, thereby slowing down the overall transaction process and opening any audit or document trail to possible fraud.

For example, when using a conventional system, e.g. [5], at least one copy of a contract involved in a transaction process may need to be printed-off and physically signed by one or more parties to the contract before being posted or faxed to one or more other parties to the contract for signature or approval, etc. This is not only slow and burdensome, but creates an opportunity for replacement non-original documents, possibly having forged signatures, and administrative errors to be introduced into the transaction process.

Accordingly, there still exists a need for improved transaction processing systems and methods that address the aforementioned shortcomings of conventional systems when they are subject to additional technical functional constraints imposed by various data processing/handling standards.

### Summary of the invention

Various aspects and embodiments of the present invention have therefore been developed with the previously mentioned shortcomings borne in mind.

According to a first aspect of the invention, there is provided a transaction processing system for secure paperless approval of electronic documents. The system comprises a communications network, a document management server and a client server.

The document management server is operable to verify and approve the content of an electronic document and to generate an approved document therefrom. The client server is operable to provide the electronic document for approval to the document management server via the communications network, and the user terminal is operable to receive the approved document from the document management server via the communications network and provide the approved document to a user.

According to a second aspect of the invention, there is provided a transaction processing method for secure paperless approval of electronic documents. The method comprises providing an electronic document for approval to a document management server via a communications network, verifying and approving the content of the electronic document, generating an approved document from the electronic document, and providing the approved document to a user.

According to a third aspect of the invention, there is provided a computer program product comprising computer code operable to configure one or data processing apparatus to implement one or more of the method steps according to the second aspect of the present invention.

Various aspects and embodiments of the present invention give rise to advantages over conventional transaction processing systems. For example, certain embodiments of the present invention enable three-way data capture for the validation of documents to be performed, e.g. for legal/financial applications, without the need to produce a paper copy for manual signature. This in turn speeds up various processes using such systems/methods and reduces the possibility for errors (e.g. scanning errors, data entry errors, etc.) being introduced into the documents, whilst also reducing the need for additional manual checks.

One technical problem addressed by the present invention, is thus how to automatically manage a tri-party document (e.g. lease agreement) having certain data capture requirement information (e.g. signature/approval) that currently imposes manual step requirements on conventional systems.

One technical solution, provided for example by the systems and methods described herein, removes the need for such additional manual process steps. At present, this needs to be done using embodiments of the present invention as the manual alternative cannot eliminate, for example, at least one printing, manual signing, physical checking and transmission (e.g. faxing) cycle.

Various embodiments of the present invention therefore enable a process to be performed that cannot be undertaken manually using the same (reduced) number of processing steps. Hence various embodiments of the invention are also able to speed overall transaction processing times, as well as providing for enhanced security and a saving of physical resources, such as paper.

### Brief description of the drawings

Various aspects and embodiments of the present invention will now be described in connection with the accompanying drawings, in which:
Figure 1 shows a transaction processing system according to an embodiment of the present invention;
Figure 2 shows a logical diagram illustrating process flow in a method according to an embodiment of the present invention;
Figure 3 shows a logical diagram illustrating process flow in a method according to an embodiment of the present invention; and
Figure 4 also shows a logical diagram illustrating process flow in a method according to an embodiment of the present invention.

### Detailed description

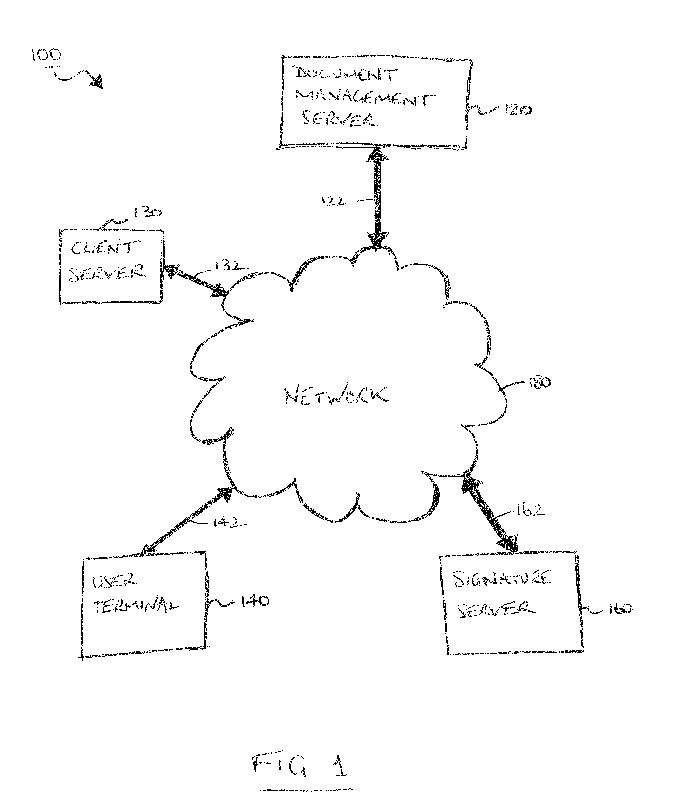

Figure 1 shows a transaction processing system 100 according to an embodiment of the present invention. The transaction processing system 100 is for the secure paperless approval of electronic documents and comprises a communications network 180 to which are connected a document management server 120, a client server 130, a user terminal 140 and a signature server 160.

In one embodiment the communications network 180 is a virtual private network (VPN) formed using the Internet, and the document management server 120, the client server 130, the user terminal 140 and the signature server 160 are remotely located data processing devices, such as personal computers (PCs).

A user, who is a first party to a transaction, has access to the user terminal 140. The user terminal 140 is connected to the communications network 180 via a bidirectional data link 142, and can be used to generate a transaction request. In the transaction request, the user can indicate that they wish to enter into an agreement with a second party for the provision of goods, services, etc.

A client, who is the second party to the transaction, has access to the client server 130. The client server 130 is connected to the communications network 180 via a bidirectional data link 132. In operation, the client server 130 receives the transaction request from the user and can then automatically generate and transmit a sub-request relating to the transaction that needs third party approval for successful completion of the transaction.

A service provider, who is the third party to the transaction, has access to the document management server 120. The document management server 120 is connected to the communications network 180 via a bidirectional data link 122. The document management server 120 is operable automatically to verify and approve the content of an electronic document relating to the sub-request and automatically to generate an approved document therefrom if the sub-request meets third party requirements.

In the embodiment of Figure 1 a signature server 160 is also provided within the transaction processing system 100 connected to the communications network 180 via a bidirectional data link 162. The signature server 160 is operable to apply electronic signatures to various electronic documents exchanged during transaction requests or transaction sub-requests in order to verify and confirm the identity of the various parties to the transaction.

Whilst the functionality provided by the signature server 160 is provided by a separate remotely located second service provider in the illustrated embodiment, for example as provided by EchoSign^{™} [7], those skilled in the art will recognise that such a digital signature service may be provided locally, for example, by one or more software plugin modules executed by the document management server 120, the client server 130 and/or the user terminal 140.

By way of example, in one preferred application of the transaction processing system 100 described above and discussed in greater detail below, the transaction request is a request to generate a leasing agreement for capital equipment, such as aircraft or other vehicles, that the user wishes to enter into with the client. In this example, the third party service provider is able to provide a financing agreement to support the leasing agreement, with the transaction processing system 100 being able to automatically broker the lease agreement between the user and the client, automatically obtain approval for financing of the agreement, and automatically and, in compliance with the requirements imposed by BACS [6], securely set up an automated direct debit repayment scheme for the financing without the need for the user ever to generate, sign and fax or mail a paper copy of a direct debit mandate, or for the client to become directly involved with the financing aspects of the transaction.

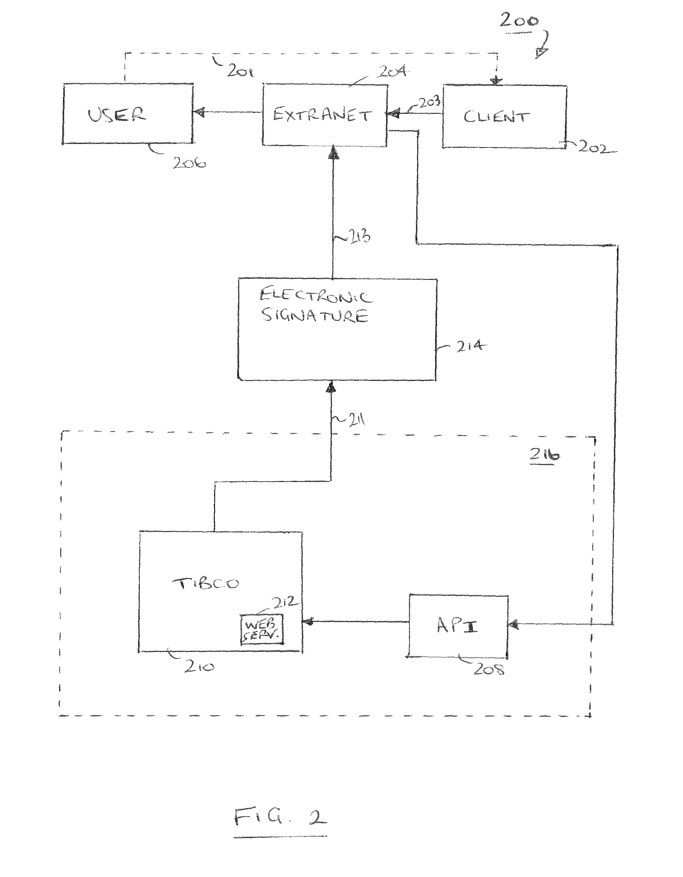

Figure 2 shows a logical diagram illustrating process flow in a method 200 according to an embodiment of the present invention. The method 200 can be implemented, for example, using software modules or components that are executed by the transaction processing system 100 illustrated in Figure 1, and the method 200 permits accurate and reliable data capture to be performed where three (or more) parties to a transaction need to validate the captured data.

A user module 206 creates a transaction request 201 at the instantiation of a user which is transmitted to a client module 202. The transaction request 201 is formatted as an electronic document having a plurality of fields. These fields identify the user and the nature of the transaction request, and further include one or more data flags that are set in order to indicate whether or not the transaction request 201 requires actioning by a third party in order to fully validate that transaction request 201.

Before transmission to the client module 202, the transaction request 201 can be digitally signed by the user module 206 using the user's asymmetrical private key. The identity of the user can then be checked by the client module 202 by application of the user's known corresponding public key to the digital signature applied to the transaction request 201 to verify the identity of the user, as is known in the art.

Having validated the user's identity, thus identifying the transaction request 201 as valid, the client module 202 checks the data flags of transaction request 201 in order to identify any transaction sub-requests that need to be actioned by a third party.

Where the client module 202 identifies the transaction request 201 as being in need of third party action, the third party is identified from the respective data flag. A sub-request 203 relating to the transaction is then automatically generated by the client module 202 and transmitted to an extranet module 204 hosted by the third party. The sub-request 203 is preferably digitally signed using the client's asymmetrical private key so that the sub-request 203 can be subsequently identified by the extranet module 204 as originating from the client. The extranet module 204 may be further operable in various embodiments to generate deal proposals, provide credit decisioning and implement document/data merging from input fields, for example, in an enterprise environment.

The sub-request 203 itself contains an electronic document having a number of predefined data fields. These data fields identify the user, the client and the nature of the sub-request, including any quantification thereof. For example, where a sub-request relates to a request for third party financing of the transaction the data fields could include proposed repayment amount information as well as repayment frequency and duration information (e.g. £20,000, monthly, for 60 months).

Various types of electronic document may be used, including, for example, those in one or more of the following data formats: portable document format (PDF), Word^{™}, plain text, Excel^{™}, rich text format (RTF), etc. However, various preferred embodiments of the present invention use Adobe^{™} PDF as it provides a data format that is considered to be a secure industry standard format that additionally provides documents having a small file size such that they can be transmitted relatively rapidly, or by using low bandwidth communications channels, for example.

Invalid sub-requests 203 are flagged up to the client module 202 and/or the user module 206, by way of error messages transmitted from the extranet module 204. Validated sub-requests 203 however are converted into PDF and passed from the extranet module 204 to a decisioning module 216. The decisioning module 216 may be hosted by the third party along with, or as part of, the extranet module 204, for example.

The decisioning module 216 comprises an application programming interface (API) 208 that converts sub-requests 203 in PDF format to a form recognisable by a decision module 210, operating, in this example, on a TIBCO^{™} software platform [8] that provides enterprise software operating according to a service-oriented architecture (SOA).

The decision module 210 initiates a credit check on the user identified in the sub-request 203 by instantiating a web service 212 that automatically contacts relevant remote credit check database hosts to obtain a score credit score value associated with the user. The credit score value is returned to the decision module 210 which then determines whether or not to approve credit for the user by comparing the credit score value to a predetermined threshold value. A range of approved credit criteria may also be used, for example, where it is determined that a certain user could be offered a higher credit interest rate when it is determined that they are at a higher risk of payment default.

A decision message 211 is formulated as an electronic document by the decision module 210 which includes data fields indicating whether or not, for example, credit is to be offered and if so on what terms. Such an electronic document relating to the sub-request is an approved document if the sub-request meets the third party requirements, for example, for offering credit on any terms.

The decision message 211 is transmitted to an electronic signature module 214 where it is electronically signed on behalf of the third party. A signed decision message 213 is then transmitted from the electronic signature module 214 (e.g. provided by EchoSign^{™} [7]) back to the extranet module 204. The extranet module 204 then checks the validity of the signed decision message 213, and informs the client module 202, and optionally the user module 206, of the result of the decisioning module 216.

The decision module 210 may also optionally run a service on a TIBCO^{™} platform that provides an interface between the electronic signature module 214 and the decision module 210. The decision message 211 may be sent via a file poller run by the service which enables a file to be transferred to a specific location before being forwarded to the electronic signature module 214.

Where the electronic signature module 214 is provided by EchoSign^{™}, the service may then issue a SOAPRequestReply instruction to an EchoSign^{™} API in order to request information relating to the signing of the decision message 211. For example, information including an indication of which party signed which electronic document and at what time may be transmitted back to the decision module 210 in response to the SOAPRequestReply instruction. Standard API calls may thus be used in which complexity is hidden from various applications that might be implemented using the method 200.

Use of the EchoSign^{™} service also enables centralised logging of activity to be provided as the accounts thereof are controlled centrally. It also, conveniently, provides that any failures of calls to the EchoSign^{™} API generate emails to a support team thereby providing early indications of any potential system-wide problems that might arise.

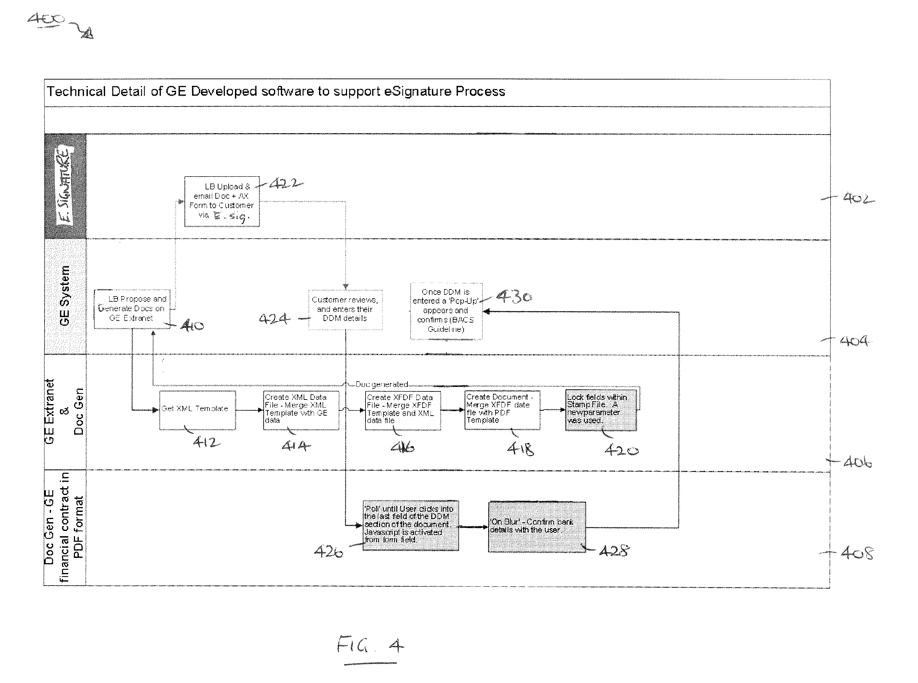

Where the decisioning module 216 has approved the sub-request 203, the extranet module 204 can then automatically instantiate a paperless direct debit process resulting in a secure dialogue between the user and the third party ultimately for the setting up of an automated repayment plan in accordance with the terms defined in the signed decision message 213. One example of such an automatically instantiated paperless direct debit process dialogue is described below, in connection with Figure 4.

In various embodiments of the present invention, the extranet module 204 is also further operable to provide at least the following system operations:

| | |
|---|---|
| sendDocument() | - sends a document for signing |
| getDocumentInfo() | - gets the status of a document |
| getLatestDocument() | - gets the latest version of a document |
| getDocumentByVersion() | - gets any version of a document |
| cancelDocument() | - cancels a document |
| sendReminder() | - sends a reminder for document signing |

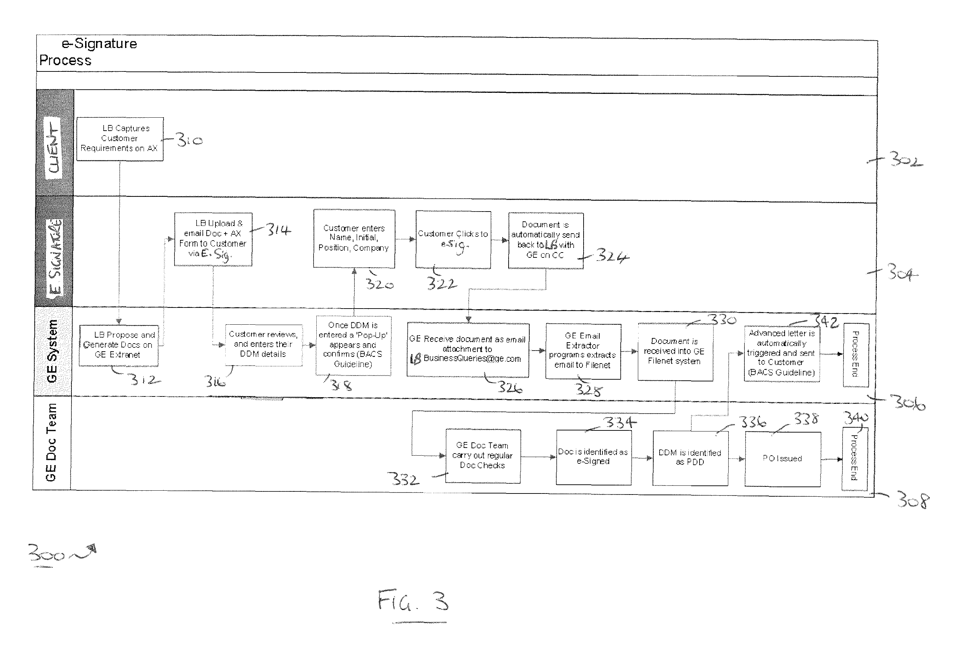

Figure 3 shows a logical diagram illustrating process flow in a method 300 according to an embodiment of the present invention. The method 300 can be implemented, for example, using software modules or components that are executed by the transaction processing system 100 illustrated in Figure 1.

In this example, at step 310 a local business (LB) captures a user's requirements (e.g. their customer's requirements) on an equipment schedule document (AX). This step can be implemented at a client server layer 302 using a client server.

At step 312 the local business then proposes and generates documents using a third party extranet (e.g. a GE^{™} extranet service). These documents can be PDF documents that include user/customer information as well as financial information relating to the transaction. These documents are then uploaded and emailed to the user along with a copy of the equipment schedule document at step 314, via an electronic signature service layer 304 in order to authenticate their providence.

At step 316 the user links to the third party extranet layer 306, and reviews and enters their direct debit mandate details in a form presented to the user. Once the form is correctly filled, at step 318, a pop-up appears for confirmation (e.g. containing a summary copy of all the previously entered information to the user) in accordance with the BACS guidelines [6].

Control then passes back to the electronic signature service layer 304 in order for the user to enter their name, initials, position and company details at step 320. Upon completion of this task, the user clicks a graphical user interface (GUI) icon button at step 322 to activate electronic signing of the paperless direct debit mandate.

A copy of the paperless direct debit mandate electronic document is then transmitted back to the local business with the third party being copied in on the communication at step 324.

In the third party extranet layer 306, at step 326, the third party receives the copy of the paperless direct debit mandate electronic document as an email attachment. The address of the email to which the attachment is sent automatically identifies the local business as a client. For example, the email address might be LBBusinessQueries@ge.com where "LB" denotes an identifier for uniquely identifying the local business acting as the client in the transaction.

At step 328 email extractor programs extract the content of the email to FileNet^{™}, where subsequently the paperless direct debit mandate electronic document is stored 330 (e.g. by using Java^{™}, API, or XML and image downloads with indexing values).

Once the electronic document is stored 330 and identified as being paperless, at step 342, an advanced hard copy letter is automatically created and sent to the user in accordance with the BACS guidelines [6].

Optionally, a manual document team checking layer 308 can be provided in parallel with the automated steps of method 300 to provide extra security. For example, once the paperless direct debit mandate electronic document has been stored, at step 330, a document team may carry out various standard document checks 332, identify the electronic document as being electronically signed 334, identify the direct debit mandate as being a paperless version 336 and issue a purchase order 338 in order to comply with various accounting standards and practises relating to financial transactions.

Figure 4 shows a logical diagram illustrating process flow in a method 400 according to an embodiment of the present invention. The method 400 shows one example of an automatically instantiated paperless direct debit process for use with various embodiments of the present invention.

In this example, at step 410 a local business (LB) proposes and generates documents using a third party extranet (e.g. a GE^{™} extranet service). This step can be implemented at a third party system layer 404 using a third party server such as, for example, the document management server 120 shown in Figure 1.

At step 412, a extensible mark-up language (XML) template is retrieved at an extranet and document generation layer 406. The template may, for example, be stored by the document management server 120. The extranet and document generation layer 406 may also be provided using the third party server, if desired.

The XML template is merged with third party data at step 414 to create an XML data file containing user/customer information and financial information relating to the transaction.

At step 416 the XML data file is merged with an XFDF template to create an XFDF data file. The XFDF template is an Adobe^{™} PDF XML type template that provides a version of XML that can be populated into PDF.

The XFDF data file data file is then merged with a PDF template at step 418 to create a PDF document. This may be achieved, for example, by using an Adobe^{™} Acrobat forms document (FDF) merge.

The fields of the PDF document are then locked within a stamp file at step 420. Which fields are locked, and which kept open, depends on the nature of the transaction being processed. The fields to be locked may be locked, for example, by setting a switch in an FDF merge software module at field level. The locked PDF document is then uploaded though the third party system layer 404 to an electronic signature layer 402 where it is signed and emailed along with an equipment schedule form (AX) to a user 422.

At step 424 the user then accesses the third party system layer 404 in order to securely review and enter their direct debit mandate (DDM) details. A process 426 in a PDF format generation layer 408 polls until the user clicks the last field of the DDM.

Within the form field properties, an 'On Blur' trigger is set to activate and run a JavaScript^{™} procedure. This procedure retrieves all the data from the form fields within the DDM section and then reformats this data.

The data is then displayed back to the user via a confirmation box within a PDF document, forcing the user to check their details and click `OK' within a confirmation box, thereby confirming the banking details of the user at step 428.

Once the direct debit mandate are correctly entered, at step 430, a pop-up appears for confirmation in accordance with the BACS guidelines [6]. The automatically instantiated paperless direct debit process 400 is then complete.

Various embodiments of the present invention have been described herein. However, those skilled in the art will realise that various alternative implementations and embodiments are possible. For example, servers may be formed using distributed systems, e.g. for load balancing and/or for providing backup redundancy etc.

Various embodiments of the invention may be implemented using one or more of: hardware, software and/or firmware. In one embodiment, computer code may be provided as a software product that is operable to upgrade an existing conventional system so as to provide new functionality in accordance with various aspects and/or embodiments of the present invention. The computer code may also, or additionally, be provided as a computer program product that may, for example, be provided on a carrier medium. Such a carrier medium may, for example, include signals transmissible over various links, for example, the Internet, a wireless link, an optical link, a radio link, an electronic link, a dedicated data/telephone link, LAN/WAN, etc., and may be used for upgrading an existing system, and/or the carrier medium may include computer code on a conventional carrier medium, such as a magnetic disk, a magnetic tape, an optical disk, a semiconductor device, etc.

Those skilled in the art will recognise that various embodiments may be used to upgrade existing systems. They would also realise that certain embodiments could be implemented using a distributed system, with different functions being performed by different data processing apparatus.

Whilst the present invention has been described in accordance with various aspects and preferred embodiments, it is to be understood that the scope of the invention is not considered to be limited solely thereto and that it is the Applicant's intention that all variants and equivalents thereof also fall within the scope of the appended claims.

### References

1. EP-B1-0 209 907 (Sohei)
2. EP-B1-0 848 361 (Ericsson)
3. EP-B1-0 886 839 (Citibank)
4. EP-B1-0 567 291 (Hitachi)
5. EP-B1-0 715 740 (Affinity Technology)
6. Bacs Payment Schemes Limited, London, U.K., http://www.bacs.co.uk
7. EchoSign^{™}, Palo Alto, California, U.S.A., http://www.echosign.com
8. TIBCO Software Inc., Palo Alto, California, U.S.A., http://www.tibco.com

Where permitted, the contents of the above-mentioned references are hereby also incorporated into this application by reference in their entirety.

## Claims

1. A transaction processing system (100) for secure paperless approval of electronic documents, the system comprising:
a communications network (180);
a document management server (120) operable to verify and approve the content of an electronic document and to generate an approved document therefrom;
a client server (130) operable to provide the electronic document for approval to the document management server (120) via the communications network (180); and
a user terminal (140) operable to receive the approved document from the document management server (120) via the communications network (180) and provide the approved document to a user.

2. The transaction processing system (100) of claim 1, wherein:
the user terminal (140) is operable to create a transaction request (201) containing a first electronic document at the instantiation of a user and to transmit the transaction request (201) to the client server (130); and
the client server (130) is operable to identify the transaction request (201) as being in need of action by a third party, and conditional thereon, automatically generate a sub-request (203) relating to the transaction containing a second electronic document and transmit that sub-request (203) to the document server (120) for automatic approval or disapproval thereof.

3. The transaction processing system (100) of any preceding claim, further comprising a signature server (160) operably coupled to the communications network (180), wherein the signature server (160) is operable to digitally sign electronic documents used in transaction requests in order to enable verification of the identities of one or more parties to a transaction.

4. The transaction processing system (100) of any preceding claim, wherein the document server (120) is operable to automatically instantiate a paperless direct debit process (400) that results in a secure dialogue session being opened between the user terminal (140) and the document server (120) for the setting up of an automated repayment plan.

5. A transaction processing method (200) for secure paperless approval of electronic documents, the method (200) comprising:
providing an electronic document for approval to a document management server (120) via a communications network (180);
verifying and approving the content of the electronic document;
generating an approved document from the electronic document; and
providing the approved document to a user.

6. The transaction processing method (100) of claim 5, further comprising:
creating a transaction request (201) containing a first electronic document at the instantiation of a user;
transmitting the transaction request (201) to a client server (130);
identifying the transaction request (201) as being in need of action by a third party, and conditional thereon, automatically generating a sub-request (203) relating to the transaction containing a second electronic document;
transmitting the sub-request (203) to the document server (120); and
automatically approving or disapproving the sub-request (203).

7. The transaction processing method (200) of claim 5 or claim 6, further comprising digitally signing one or more electronic documents used in transaction requests in order to enable verification of the identities of one or more parties to a transaction.

8. The transaction processing method (200) of any one of claims 5 to 7, further comprising automatically instantiating a paperless direct debit process (400) that results in a secure dialogue session being opened between a user terminal (140) and the document server (120) for the setting up of an automated repayment plan.

9. A computer program product comprising computer code operable to configure one or data processing apparatus to implement one or more of the method steps of any one of claims 5 to 8.

10. The computer program product of claim 9, wherein the computer code is embodied on a carrier medium.

11. The computer program product of Claim 10, wherein the carrier medium comprises one or more of: a magnetic disk, a magnetic tape, an optical disk, an electronic signal, an optical signal, a radio signal, and a semiconductor device.
